# EUROPEAN PATENT SPECIFICATION

(11) **EP 4 500 017 B1**
(45) Date of publication and mention of the grant of the patent: **19.08.2026**
(21) Application number: 23713443.2
(22) Date of filing: 17.03.2023
(51) Int. Cl.: F04C 15/00, F16D 1/00, F16F 15/12, F16F 15/131

(54) **ROTATIONAL ELEMENT AND COMPRESSOR ASSEMBLY COMPRISING SUCH A ROTATIONAL ELEMENT**
ROTATIONSELEMENT UND VERDICHTERANORDNUNG MIT SOLCH EINEM ROTATIONSELEMENT
ÉLÉMENT ROTATIF ET ENSEMBLE COMPRESSEUR LE COMPRENANT

(30) Priority: 30.03.2022 BE 202205228; 30.03.2022 BE 202205229; 23.05.2022 BE 202205397
(43) Date of publication of application: 05.02.2025
(73) Proprietor: Atlas Copco Airpower, Naamloze Vennootschap, 2610 Wilrijk (BE)
(72) Inventor: KORTHOUT, Katleen, 2610 Wilrijk (BE); SWERTS, Thomas, 2610 Wilrijk (BE); DEWIL, Dimitri, 2610 Wilrijk (BE)
(74) Representative: Van Minnebruggen, Ewan Benito Agnes
(86) International application number: PCT/IB2023/052621
(87) International publication number: WO 2023/187537

(56) References cited:
- CN-A- 113 819 189
- US-A- 4 291 547
- US-A1- 2004 003 807

## Description

### Technical Field

The present invention relates to a rotational element, such as a shaft or other rotational part of a device such as a motor or a compressor or any other device.

Such a rotational element is intended for being driven for a rotational movement by means of a driving device, such as an electric motor or other activator, or for forming a part of such a driving device.

Typically, such a rotational element is a compressor rotor or compressor rotor shaft, a motor or motor shaft or a combination of these kinds of components or devices. However, still other kinds of rotational elements are not excluded from the invention.

Furthermore, a rotational element to which the invention is related is internally provided with an annular cavity which separates a central part from an outer part of the rotational element.

The central part of a rotational element in accordance with the invention has typically an elongated shape which is typically also relatively narrow compared to the outer part of the rotational element. The length of the central part typically ranges between 300 and 400 mm, but rotational elements having a central part with another length are of course not excluded from the invention. The central part is typically cylindrical and has typically a diameter of more or less 6 mm, but rotational elements having a central part with another shape and/or another diameter are not excluded from the invention.

The outer part and central part of the rotational element can consist of separate parts which are rigidly interconnected to one another so to form a composed rotational element. On the other hand, the rotational element can also be formed as a single monolithic entity or piece.

Such a rotational element to which the invention is related, is used in a device, such as a compressor element or a motor driving such a compressor element, which usually drives the rotational element at high rotational speeds. A typical range of driving speeds at which the rotational element is rotated is for example the range between 2500-8640 rpm (rotations per minute). Such a range of driving speeds is for example typically applied in a tooth compressor element.

Since the central part and the outer part of the rotational element are rigidly interconnected or are made as a single monolithic piece, they rotate simultaneously and synchronously together at the driving speed.

The invention also relates to a compressor assembly comprising a rotational element in accordance with the invention, which comprises a motor which is connected to a compressor element, wherein a motor shaft of the motor drives at least one compressor rotor shaft of a compressor rotor of the compressor element and wherein the motor shaft, the rotor shaft or the combination of the motor shaft and the rotor shaft is forming the concerned rotational element or a part thereof.

The motor is typically an electric motor, but it can be a combustion engine, or it can in principle be any other type of rotational driver or activator or combination of devices for generating a rotational movement.

The compressor element of the compressor assembly is intended for compressing or pressurizing a fluid, typically a gaseous fluid such as air or another gas, such as oxygen, carbon dioxide, nitrogen, argon, helium or hydrogen. It is however not excluded from the invention that the compressor element is used for compressing or pressurizing a denser fluid, such as water vapor or the like.

The invention is specifically interesting for compressor assemblies wherein the compressor element is an oil-free or oil-less compressor element, which means that no oil for lubrication is injected between the compressor rotors itself of the compressor element.

An oil-free compressor element is not a compressor element wherein no oil is used at all, but it usually comprises an oil circulation system for lubrication or cooling purposes. Elements or components of the compressor assembly that need lubrication or cooling by oil typically include: gearwheels, such as timing gears or gearwheels of a gearwheel transmission between the compressor element and the motor of the compressor assembly; a compressor outlet; bearings of a compressor element shaft or compressor rotor shaft; a motor shaft bearing; and so on.

The reason for using an oil-free or oil-less compressor element is that the fluid to be pressurized or compressed in the compressor element is kept free from oil or uncontaminated by oil. This is for example very important in food processing applications and so on.

Different techniques can be used to compress or pressurize a fluid in a compressor element. The present invention is related to a compressor assembly wherein the compressor element is a rotary compressor element having compressor rotors driven by the motor for a rotational movement.

Without restricting the invention to this example, the invention relates in particular to compressor assemblies comprising an oil-free double-rotor compressor element which uses oil as lubricant and/or a coolant. A double-rotor compressor element can for example be a screw compressor element or a tooth compressor element.

Nevertheless, the invention is not restricted to compressor assemblies comprising an oil-free or oil-less compressor element and compressor assemblies comprising for example an oil-injected compressor element are not excluded from the invention.

The invention is also not restricted to compressor assemblies comprising a rotary compressor element, but other types of compressor elements can be used.

From another point of view, the invention also relates to compressor assemblies which comprise an oil-pump for pumping oil through an afore-mentioned oil circulation circuit of the compressor assembly, and to possible improvements with respect to this oil-pump in the compressor assembly. Such an oil-pump is typically used for pumping oil from an oil-reservoir or oil-sump to components of the compressor assembly and back to the oil-reservoir or oil-sump.

Furthermore, the invention relates to techniques by which the motor shaft is coupled to a rotor shaft of a compressor rotor of the concerned compressor element.

### Background

When a rotational element of the invention is driven for a rotational movement, the rotational element is subjected to vibrations generated by the driving device or by the device of which it is a part. In still another case, the rotational element is generating itself such vibrations during its rotation, for example due to some (possibly very small) imbalance in the rotational element with respect to its rotational central axis.

In short, vibrations occurring in the rotational element during rotation can originate externally as well as internally to the rotational element, or as a combination of influences which are external or internal to the rotational element. These vibrations oscillate at a frequency which is linked to the rotational speed of the rotational element.

During one rotation of the rotational element, the amplitude of such a vibration varies from a maximum amplitude to a minimum amplitude and back to the maximum amplitude. A typical range of pulsation frequencies occurring in such a rotational element in the operating vibrational regime of for example a tooth compressor is therefore a pulsation frequency range between 83 Hz and 288 Hz. The main pulsation frequency is originating from the rotational speed (frequency) multiplied by the number of compression cycles per revolution. For a common tooth compressor there are two compression cycles per revolution. For a screw compressor there are usually four compression cycles per revolution.

A problem encountered in the type of rotational elements to which the present invention is related, is that an eigenfrequency or natural frequency of the central part of the rotational element often falls within the range of pulsation frequencies to which the rotational element is subjected, or which is generated by the rotational element itself. It is a known phenomenon of so-called resonance that when an object or system is subjected to a periodic force which pulsates at a frequency which is equal to or close to a natural frequency or eigenfrequency of that object or system, increased vibrational amplitudes occur, at least compared to amplitudes experienced when a same amount of vibrational force is applied at a frequency which does not coincide with a natural frequency or eigenfrequency of the object or system.

This means that during acceleration, for example for driving a rotor of a compressor element from standstill to its nominal speed, or during a change of the rotational speed of such a rotational element, at a certain rotational speed within the operational speed range, the central part of the rotational element risks to be at least temporarily in a status of resonance.

In such a status of resonance, the central part often experiences oscillations of dangerously large amplitude. This high vibrational load can cause failure of the central part or other parts. The failure mode is often a fatigue failure. This means that failure is occurring due to constant bending of a part of the rotational element due to the excitation of a bending mode. Typically, fracture occurs at the highest loaded location of the central part, which can usually be attributed to stress concentration at the contact of the central part of the rotational element with the remaining part of the rotational element.

In certain embodiments of a rotational element in accordance with the invention, the central part of the rotational element can be a separate part which is rigidly connected to the remaining part of the rotational element, and which is pre-loaded or pre-tensioned with respect to the remaining part of the rotational element. Obviously, stress concentrations in such rotational elements wherein a central part is pre-loaded or pre-tensioned are even higher, and especially when such a rotational element is brought into a status of resonance. As a consequence, rotational elements with a pre-tensioned or pre-loaded central part are even still more prone to failure when being brought in a status of resonance.

CN 113 819 189 A discloses a disc hub and a shaft with integrated damping mechanism.

US 2004/003807 A1 discloses compressible elements for use with rotatable elements installable onto a shaft or spindle or for use with shafts or spindles upon which rotatable elements are to be installed.

### Summary of the invention

It is an aim of the invention to overcome one or more of the afore-mentioned problems and/or possibly still other problems.

It is particularly a goal of the invention to avoid that an afore-mentioned rotational element is brought into a status of resonance when driven at a rotational speed which is within the mentioned typical, operational range or to ensure that at least the consequences of such a status of resonance are reduced, for example by reducing the vibrational amplitudes involved or stress concentrations occurring in such a status of resonance.

Another aim of the present invention is to provide a solution which is easily applied on a rotational element, and which is cost-effective.

Still another possible aim of the invention is to provide a relatively simple, cheap, and effective manner by which an existing rotational element can be adapted so to reach the above-described aims.

Another objective of the invention is to increase the operational reliability and functional safety of a concerned rotational element or of a compressor assembly or other device in which it is applied.

It is also a possible objective of the present invention to provide a solution for reducing the effects of resonance on a concerned rotational element and/or the device in which it is integrated or for avoiding such a resonance from occurring, and wherein the provided solution is easily adapted in function of the actual range of operational rotational speeds to which the concerned rotational element is exposed in practice.

To this end, the present invention relates to a rotational element, such as a shaft or other rotational part of a device such as a motor or compressor element, which is intended for being driven for a rotational movement by means of a driving device or for forming a part of such a driving device, which rotational element is internally provided with at least one annular cavity which separates a central part from an outer part of the rotational element, and wherein the outer part is provided with one or more holes or channels which extend from an outer wall of the outer part to the annular cavity and wherein in the holes or channels fixation means are fixedly mounted which each extend through the corresponding hole or channel and which have a tip which is abutting against the central part.

A first great advantage of such a rotational element in accordance with the invention is that it comprises fixation means which are abutting with a tip against the central part.

Hereby, the fixation means can be made such that they absorb the energy of the vibration of the central part, and hence dampen the vibrational amplitude. In such an embodiment, possible negative or destructive effects of large vibration amplitudes occurring in the central part when it is brought into a status of resonance can be avoided by tempering or dampening the vibrational amplitudes. In the concerned embodiments, resonance is possibly still occurring, but the consequences are made less severe.

In another embodiment the fixation means are made such that they keep the central part with their tip locally in a fixed radial position with respect to the outer part. In that case, the fixation means exert with their tip a clamping force on the central part, so that in the corresponding axial location the central part cannot deviate radially from its central position.

Therefore, in that specific axial location the central part cannot radially vibrate or the amplitude of such a radial vibration on the central part is in that specific local axial location forced to be zero. As a consequence, the concerned specific axial location of the central part can only be the location of a node of a standing vibration wave in the central part.

The first or lowest eigenfrequency or natural frequency of such a central part is normally a frequency corresponding to a wave having no intermediate nodes between the axial extremities of the central part.

So, by suppressing the radial movement of the central part in an axial location which is intermediate between the extremities of the central part, it is possible to shift a resonance frequency of the central part to a higher order harmonic, i.e., to a frequency which is higher than the first or lowest eigenfrequency or natural frequency of the central part. Preferably, this higher order harmonic results in a resonance frequency which is outside of the main excitation regime of the rotating device that is the source of the vibrations on the central part. In that way, it can be prevented that the central part is brought into a status of resonance by means of the concerned device.

Clearly, both proposed methods reduce substantially the risk for problems or failure occurring due to phenomena related to resonance.

Another advantage of a rotational element in accordance with the invention is that the outer part is provided with one or more holes or channels which extend from an outer wall of the outer part to the annular cavity between the outer part and the central part of the rotational element and wherein in the holes or channels fixation means are mounted fixedly.

Indeed, such a way of providing fixation means for damping vibrations in a resonance status or for shifting a resonance frequency to a higher harmonic is very practical, since the fixation means can be brought in from the outside of the rotational element into the holes or channels in the outer part of the rotational element. In that way it is very easy to assemble and possibly disassemble the fixation means, for example for maintenance.

An additional benefit of an external assembly is an increased reliability of the assembly and the obtained result. In other known devices or methods, sometimes damping means are provided such as O-rings which have to be introduced and/or assembled internally. In that case, there is a relatively high risk on damaging the damping means or it might be difficult to execute the different steps during assembly.

Furthermore, in possible embodiments of a rotational element in accordance with the invention, the fixation means can be adjusted from the outside of the rotational element, for example by bringing them deeper or less deep into the concerned holes or channels in the outer part of the rotational element, i.e., closer or further away from the central part of the rotational element or for tensioning the fixation means.

Still another advantage of a rotational element in accordance with the invention is that it comprises an annular cavity, which separates the central part from the outer part of the rotational element. First of all, this means that the rotational element is executed in a certain way as a hollow rotational element, so that its weight is kept relatively low. Furthermore, the annular cavity can be used for cooling the rotational element, for example by means of cooling air blown through the annular cavity or by means of a cooling liquid such as water flowing through the annular cavity.

In a preferred embodiment of a rotational element in accordance with the invention, the holes or channels in the outer part are internally threaded holes or channels and the fixation means are bolts which are screwed into their respective threaded hole or channel until the tip of the concerned bolt is abutting against the central part.

Such an embodiment of a rotational element in accordance with the invention is clearly very advantageous. It can be made with very well-known techniques, the fixing of the fixation means, i.e., the bolts, in the threaded holes or channels is very simple and practical, and the solution is very cost-effective.

Furthermore, the threaded holes or channels can be easily created by thread boring tools in any desired axial location on the rotational element. For example, when the fixation means are used for shifting the lowest resonance frequency to a higher harmonic, such an axial location can be easily chosen at a position which corresponds to a node of a standing vibration wave with the frequency of the intended harmonic. By choosing the concerned harmonic outside the operational speed range of the rotational element, occurrence of a status of resonance can be avoided easily.

Again, it is advantageous that the fixation means in the form of bolts can be manipulated from the outside of the rotational element.

In still other embodiments of a rotational element in accordance with the invention, the fixation means are inserted in the holes or channels in the outer part of the rotational element, and are fixedly connected in the concerned holes or channels by other methods, for example by gluing or by providing any kind of adhesive material between the fixation means and the rotational element, such as an epoxy, silicone or polyester resin and so on.

Another preferred aspect of a rotational element in accordance with the invention is that the tip of the fixation means, or another part of the fixation means is made of a dampening material, such as a visco-elastic material, or that the fixation means are entirely made of a dampening material, such as a visco-elastic material.

Of course, such an embodiment of a rotational element in accordance with the invention wherein the fixation means are at least partly made of a dampening material is very advantageous, since it allows to dampen vibrations occurring on the central part. This is even the case when the rotational speed of the rotational element is such that vibrations are generated which are pulsating at a frequency which is not at or even near to a resonance frequency of the central part. Obviously, this helps a lot for reducing vibration amplitudes and stress concentrations in the central part or other parts of the rotational element in all operational conditions.

Instead of fixation means in the form of bolts, it is not excluded from the invention to use fixation means in the form of setscrews, for example with a visco-elastic dog point. Fixation means in the form of bolts have however the advantage of being provided with a bolt head. By providing a counterbore seating in the outer wall of the rotational element, it is possible to limit and/or control the radial or inward movement of such a fixation means in the form of a bolt into the outer part of the rotational element. In this way the risk of an off-center alignment of the central part after tightening the fixation means, especially when tightening the first bolt of the fixation means, is prevented.

Therefore, still another preferred aspect of a rotational element in accordance with the invention is that the fixation means are provided with a fixation means head with an increased diameter compared to the internal diameter of the holes or channels and that the holes or channels are provided with an upper widened part at the outer wall of the outer part of the rotational element with dimensions corresponding to the fixation means head and with an abutment face for receiving such a fixation means head within the outer contours of the outer part for forming a counterbore seating.

In a possible embodiment of a rotational element according to the invention, the rotational element is a composed rotational element which is composed of a first rotational element part and a second rotational element part which are interconnected by means of a rigid, direct coupling.

Such an embodiment of a rotational element in accordance with the invention is advantageous in that it is formed of separate, interconnected or coupled parts, typically a first shaft and a second shaft of for example a motor and a compressor element, which can be mounted together and can in another stage again be disassembled. For coupling the concerned rotational element parts, tensioning means can be used in order to ensure a firm and rigid interconnection.

According to the invention, the rigid, direct coupling between the first rotational element part and the second rotational element part is preferably one of the following:
- a pressed coupling;
- a heat-shrinked coupling;
- a spline coupling;
- an interference fit coupling;
- a press fit coupling; or,
- a friction fit coupling.

Of course, it is not excluded from the invention to apply still other methods for realizing said rigid, direct coupling between the first rotational element part and the second rotational element part.

In a preferred embodiment of a rotational element in accordance with the invention, the first rotational element part and the second rotational element part each comprise at least a shaft part, respectively a first shaft part and a second shaft part, wherein one of these shaft parts is executed as a hollow shaft part comprising centrally an axially extending channel, which extends through the hollow shaft part, wherein in the axially extending channel of the hollow shaft part a connection stud is provided which extends with a first end into the other shaft part which is not executed as a hollow shaft part and is forming a non-hollow shaft part, and which connection stud is fixedly connected to said non-hollow shaft part at that first end and wherein at the opposite second end of the connection stud tensioning means are provided for tensioning the connection stud with respect to the hollow shaft part and wherein the connection stud is forming the central part of the rotational element.

Such an embodiment of a rotational element in accordance with the invention is very advantageous in that in an easy way a firm and rigid interconnection between the first shaft part and the second shaft part can be realized by tensioning a connection stud. Obviously, the first and second shaft parts can be dismounted again as easily Furthermore, by means of fixation means of the rotational element harmful effects of resonance excitation on the connection stud are reduced as much as possible or the occurrence of resonance of the connection stud is simply avoided by shifting the lowest possible resonance frequency to a higher harmonic.

Moreover, a rotational element in accordance with the invention is provided with tensioning means for tensioning the central part with respect to the outer part of the rotational element or vice versa, and wherein a tensile stress and a compressive stress is induced in the central part and the outer part respectively, or vice versa.

Such an embodiment of a rotational element in accordance with the invention is interesting in that it comprises tensioning means which can provide a force for keeping parts of the rotational element tightly together.

The present invention also relates to a compressor assembly comprising a rotational element in accordance with the invention as described before. Such a compressor assembly of the invention comprises a motor which is connected to a compressor element, wherein a motor shaft of the motor drives at least one compressor rotor shaft of a compressor rotor of the compressor element and wherein the motor shaft, the rotor shaft or the combination of the motor shaft and the rotor shaft is forming the rotational element or a part thereof.

Of course, the advantages described before with respect to the rotational element also apply for such a compressor assembly in accordance with the invention, namely that vibration amplitudes are reduced, or a status of resonance is avoided, so that no damaging high vibration amplitudes due to resonance can occur and / or stress concentrations are limited as much as possible.

### Brief Description of the Drawings

The invention will further be illustrated with references to the drawings, wherein:
- figure 1 represents a cross-section through a possible embodiment of a rotational element in accordance with the invention, indicated by I-I in figure 2;
- figure 2 represents a cross-section through the rotational element, represented in figure 1, according to a section which is indicated by II-II in figure 1;
- figure 3 illustrates in a similar way as in figure 1 an alternative embodiment of a rotational element in accordance with the invention;
- figures 4 to 7 illustrate in a cross-sectional view similar to the one of figure 1 still other embodiments of a rotational element in accordance with the invention;
- figures 8 to 10 represent on a bigger scale the parts which are indicated by XIII-X respectively in figures 5 to 7;
- figure 11 illustrates schematically a compressor assembly in accordance with the invention;
- figure 12 represents on a bigger scale the part which is indicated by XII in figure 11;
- figures 13 and 14 represent in a cross-section on still a bigger scale alternative embodiments of fixation means of a rotational element in accordance with the invention;
- figure 15 illustrates in perspective view in a more realistic execution a worked open part of a compressor assembly in accordance with the invention wherein a rotational element of the invention is applied;
- figure 16 is a cross-section through still another embodiment of a rotational element in accordance with the invention; and,
- figures 17 and 18 illustrate still another embodiment of a rotational element in accordance with the invention, which are modified versions of respectively the embodiments illustrated in figure 1 and in figure 16.

### Detailed Description of Embodiment(s)

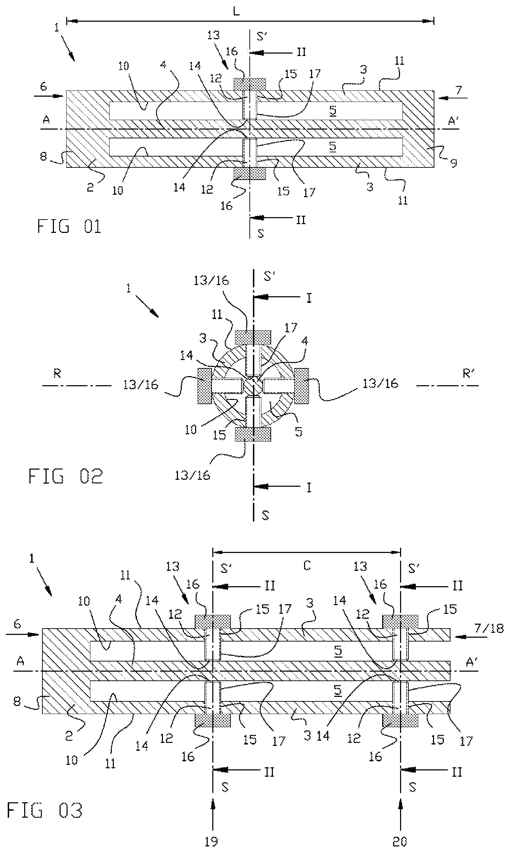

Figures 1 and 2 illustrate a first possible embodiment of a rotational element 1 in accordance with the invention. This rotational element 1 can for example serve as a shaft or other rotational part of a device such as a motor or compressor.

The body 2 of the rotational element 1 is in this case executed as a single monolithic part, having an outer part 3 and a central part 4 which are separated from one another by means of an annular cavity 5. At both axial extremities 6 and 7 of the rotational element 1, the central part 4 and the outer part 3 are in this case interconnected by means of side walls 8 and 9 of the rotational element 1.

The rotational element 1 is intended for being driven for a rotational movement by means of a driving device or for forming a part of such a driving device. For that purpose, the rotational element 1 has in the illustrated example been executed with a substantially cylindrical shape. In particular, the central part 4 of the rotational element 1 has a substantially cylindrical outer shape and also the outer part 3 of the rotational element 1 has an inner wall 10 which has a substantially cylindrical shape.

Actually, in the particular case represented in figures 1 and 2, the outer part 3 has a substantially cylindrical shape with an inner cylindrical wall 10 as well as an outer cylindrical wall 11. However, in other embodiments it is for example possible that the rotational element 1 is provided at its outside with additional elements, such as motor rotor elements, magnetic elements, electric wiring, compressor rotor screw blades, etc... which have a shape which is essentially not cylindrical.

According to the invention the outer part 3 is provided with one or more holes or channels 12, in the represented case four such channels or holes 12, which extend from the outer wall 11 of the outer part 3 to the annular cavity 5 inside the rotational element 1.

In the holes or channels 12 fixation means 13 are fixedly mounted, which each extend through the corresponding hole or channel 12 and which have a tip 14 which is abutting against the central part 4.

The holes or channels 12 are in this case internally threaded holes or channels 12 with an internal thread 15 and the fixation means 13 are bolts 16 with external thread 17, which are screwed into their respective threaded hole or channel 12 until the tip 14 of the concerned bolt 16 is abutting against the central part 4.

The fixations means 13 are in this example, a total of four bolts 16 which are provided in their respective hole or channel 12. The holes or channels 12 in the outer part 3 of the rotational element 1 all extend in a radial direction R-R' or S-S', which radial directions R-R' and S-S' are perpendicular to the axial direction A-A' of the central axis of the central part 4.

In this case, there is a first pair of holes or channels 12 and corresponding bolts 16 at opposite sides of the central part 4 which extend along a first radial direction R-R' and there is a second pair of holes or channels 12 and corresponding bolts 16 at opposite sides of the central part 4 which extend along a second radial direction S-S', which second radial direction S-S' is perpendicular to the first radial direction R-R'.

In the example represented in figures 1 and 2 the fixation means 13 and the holes or channels 12 are all located at the same axial position from the extremities 6 and 7 of the rotational element 1. In particular, the fixation means 13 and the holes or channels 12 are all located halfway the axial length L of the rotational element 1.

Such a central axial position of the fixation means 13 or bolts 16 with respect to the central part 4 is ideal. However, possibly due to the presence of other elements provided at the outside of the rotational element 1, such as for example active package in the form of magnet lamination in the case the rotational element 1 is a part of a motor rotor, other axial positions might need to be considered during the design of the rotational element 1 and its fixation means 13 and holes and channels 12.

In a preferred embodiment of a rotational element 1 in accordance with the invention the fixation means 13 are made entirely of a material which has a high Young's modulus or elastic modulus. Such a material can for example be a steel with a Young's modulus of around 220 GPa. Such a material is only very little or almost not elastically deformed under compressive or tensile stress.

When the fixation means 13 are made with such a material, at the concerned axial position of the holes and channels 12 the fixation means 13 keep the central part 4 in a fixed or almost fixed radial position, so that a radial vibration of the central part 4 in that axial position is made impossible. In that way, it is possible to prevent that the central part 4 is brought into a status of resonance at a relatively low frequency which corresponds to a free vibration of the central part 4 between its extremities by which it is fixedly connected to the side walls 8 and 9.

The lowest possible resonance frequency of the central part 4 is therefore shifted to a higher frequency. As explained in the introduction, preferably, this lowest resonance frequency is shifted to a higher level, to a frequency which is out of the frequency range of the operational rotation speeds of the rotational element 1.

In another embodiment the fixation means can be made entirely or partly of a material with good elastic and damping properties. In that case, vibration of the central part 4 is not prevented, but dampened and reduced to a certain level, so that the amplitudes of vibrations occurring, especially in a status of resonance, are smoothed out and limited.

Another aspect of an embodiment of a rotational element 1 with the invention and as also illustrated in figures 1 and 2 is that the rotational element 1 and its holes or channels 12 in the outer part 3 and the fixation means 13 have rotational symmetry around the central axis A-A' of the central part 4.

Figure 3 illustrates another embodiment of a rotational element 1 in accordance with the invention, which is first of all different from the first embodiment represented in figures 1 and 2 in that the annular cavity 5 is not closed-off at both extremities 6 and 7 by means of a side wall 8 or 9, as was the case in the first embodiment of figures 1 and 2.

In the example of figure 3, the annular cavity 5 extends to the extremity 7 of the rotational element 1, so that a kind of open-ended extremity 18 at the extremity 7 of the rotational element 1 is obtained, wherein the outer part 3 and the central part 4 of the rotational element 1 are still separated by the annular cavity 5 and are not interconnected at said open-ended extremity 18 by means of a side wall 9.

Another aspect of the embodiment of a rotational element 1 in accordance with the invention represented in figure 3 is that at least a first group 19 of holes or channels 12 and corresponding bolts 16 and a second group 20 of holes or channels 12 and corresponding bolts 16 are provided in the outer part 3 of the rotational element 1 which first group 19 and second group 20 are with a certain axial distance C spaced from one another.

Of course, the axial emplacement of both groups of holes or channels 19 and 20 illustrated in figure 3 is just an example and according to the invention more such groups can be applied, and these groups can be positioned in axial positions which are completely different.

In the preceding embodiment represented in figures 1 and 2, there was only one such group of holes or channels 12 comprising four such holes or channels 12 extending along perpendicular radial directions R-R' and S-S'. Each of the groups 19 and 20 of channels or holes 12 represented in figure 3 are executed in an exact same way. Of course, such a group 19 or 20 of channels or holes 12 can in another execution be composed of just a pair of holes or channels 12 or can be composed of any number of holes or channels 12, preferably positioned in an axisymmetric way around the central axis A-A'.

In figure 3 the angular orientation of the fixation means 13 or bolts 16 and the holes or channels 12 of group 19 is identical to the angular orientation of the fixation means 13 or bolts 16 and the holes or channels 12 of group 20. In another embodiment of a rotational element 1 of the invention it is possible that this angular orientation of both groups 19 and 20 of channels or holes 12 is different and that a relative angle is applied between the angular orientation of the first group 19 of channels or holes 12 and the angular orientation of the second group 20 of channels or holes 12. Each group 19 or 20 can for example comprise four channels or holes 12 which are oriented relatively to one another within each group 19 and 20 over an angle of 90° and wherein there is a relative angle of 45° between corresponding holes or channels 12 of the different groups 19 or 20. Similarly, each group 19 or 20 can for example comprise only two channels or holes 12 which are oriented relatively to one another within each group 19 and 20 over an angle of 180° and wherein there is a relative angle of 90° between corresponding holes or channels 12 of the different groups 19 or 20.

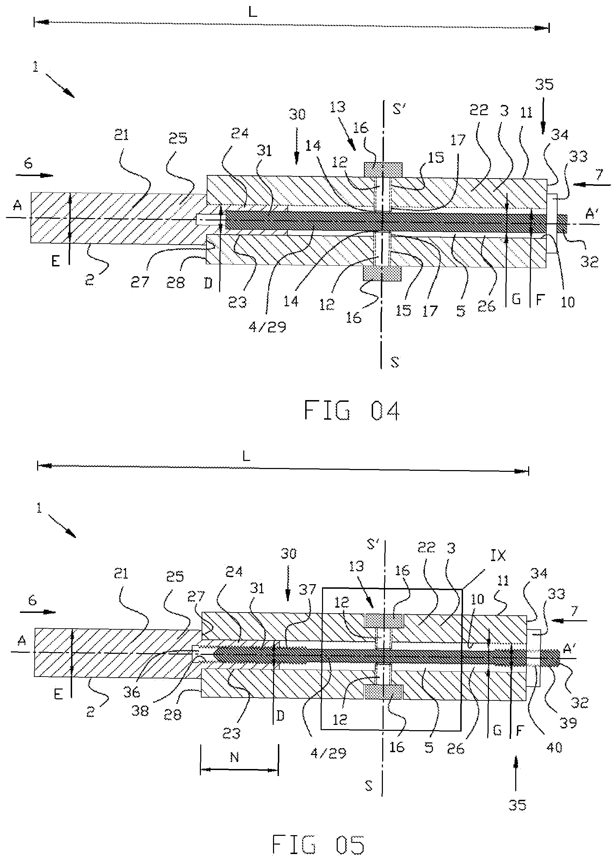

Figure 4 illustrates still another embodiment of a rotational element 1 in accordance with the invention, wherein this time, contrary to what was the case in the preceding examples of figures 1 to 3, the body 2 of the rotational element 1 is not executed as a single monolithic part, but it is composed of multiple parts which are rigidly fixed together.

In the represented example of figure 4, the composed rotational element 1 comprises a first rotational element part 21 and a second rotational element part 22 which are interconnected by means of a rigid, direct coupling 23. This rigid, direct coupling 23 is for example a press-fit coupling 23.

It is however not excluded from the invention to apply other techniques for realizing a rigid, direct coupling 23 between the concerned rotational element parts 21 and 22. Such a rigid, direct coupling 23 can for example be a pressed coupling, a heat-shrink coupling, a spline coupling, an interference fit coupling or friction fit coupling and so on.

In another embodiment an axial clamping between the concerned rotational element parts 21 and 22 can be applied and additionally a Hirth serration can be applied between the end-faces of the concerned rotational element parts 21 and 22.

The first rotational element part 21 and the second rotational element part 22 could each for example form a shaft part, for example respectively a compressor rotor shaft part 21 and a motor rotor shaft part 22 or vice versa. In that case, they are typically executed with a cylindrical shape or with at least a rotational symmetry around the central axis A-A'.

This time, for realizing a rigid, direct coupling 23, the first rotational element part 21 is provided with a stepped profile, comprising a first shaft section 24 with a smaller diameter D and a second shaft section 25 with a somewhat larger diameter E.

The second rotational element part 22 is essentially forming the outer part 3 of the rotational element 1 and is a shaft part 22 which is executed as a hollow shaft part 22, comprising an axially extending channel 26, which extends through the hollow shaft part 22.

The hollow shaft part 22 has a cylindrical inner wall 10 and a cylindrical outer wall 11. The inner diameter F of this hollow shaft part 22, or what is the same, the diameter F of the axially extending channel 26, corresponds to the outer diameter D of the first shaft section 24 of the first rotational element part 21.

The inner diameter F might be slightly smaller than the outer diameter D so to realize a very tight fit between the two rotational element parts 21 and 22 by inserting the first shaft section 24 of the first rotational element part 21 in the cylindrical inner wall 10 of the hollow shaft part 22, which is forming the outer part 3 of the rotational element 1.

At the junction between the first shaft section 24 and the second shaft section 25 of the first rotational element part 21 an abutment seating 27 is formed against which the end face 28 of the second rotational element part 22 is abutting after interconnection of the first rotational element part 21 and the second rotational element part 22.

In the case of figure 4 the central part 4 of the rotational element 1 is formed by a central stud 29, tie-rod 29 or connection stud 29. The annular cavity 5 is still separating the central part 4 from the outer part 3 of the rotational element 1. The annular cavity 5 is formed by the remaining part of the axially extending channel 26 in the outer part 3 which is surrounding the central stud 29, tie-rod 29 or connection stud 29 over a substantial part of its length. Obviously, the central stud 29, tie-rod 29 or connection stud 29 has therefore a smaller outer diameter G than the inner diameter F of the outer part 3.

At one extremity 30 of the annular cavity 5, the central stud 29, tie-rod 29 or connection stud 29 is with one end 31 fixedly mounted into the first shaft section 24 of the first rotational element part 21.

At its opposite end 32 the central stud 29, tie-rod 29 or connection stud 29 is provided with a nut 33 (forming tensioning means 33) which is at the extremity 7 of the rotational element 1 tightened against the end face 34 of the outer part 3. The nut 33 closes off the annular cavity 5 at its opposite extremity 35.

By tightening the nut 32 the central stud 29, tie-rod 29 or connection stud 29 is put under tension and exerts in that way an axial tensioning force between the first rotational element part 21 and the second rotational element part 22. This axial tensioning force increases the rigid interconnection of the two concerned parts 21 and 22, certainly when other elements such as Hirth coupling elements or friction shims are provided at the end faces of the concerned parts 21 and 22.

Figure 5 illustrates an embodiment of a rotational element 1 in accordance with the invention that is very similar to the embodiment of figure 4.

First of all, in the illustration of figure 5 it is made more explicit how the rigid connection between the central stud 28 and the first shaft section 24 of the first rotational element part 21 is realized.

In particular, the first shaft section 24 is provided with an internally threaded hole 36 for receiving the first end 31 of the central stud 29, tie-rod 29 or connection stud 29. This first end 31 of the central stud 29, tie-rod 29 or connection stud 29 is provided with external thread 37 which can cooperate with the internal thread 38 in the first shaft section 24 of the first rotational element part 21.

Furthermore, the second or opposite end 32 of the central stud 29, tie-rod 29 or connection stud 29 is provided with external thread 39 which can cooperate with the nut 33 having an internal thread 40, for tightening the central stud 29, tie-rod 29 or connection stud 29 by applying a force against the hollow shaft part 22.

As in the embodiments of a rotational element 1 in accordance with the invention represented in the preceding figures 1 to 4, the fixation means 13 are provided with a fixation means head 41 with an increased diameter H compared to the internal diameter I of the holes or channels 12 in the outer part 3 of the rotational element 1.

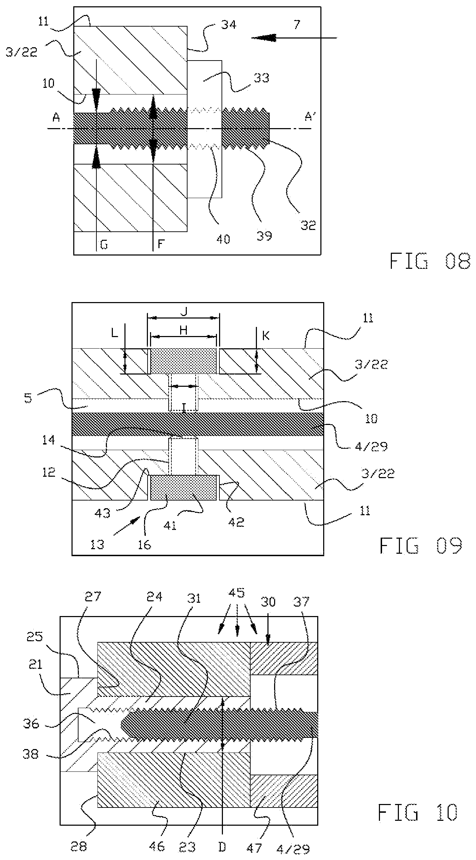

The embodiment of a rotational element 1 represented in figure 5 is however different from the former embodiments of represented in figures 1 to 4 in that the holes or channels 12 are provided with an upper widened channel part 42 at the outer wall 11 of the outer part 3 of the rotational element 1. This upper widened channel part 42 has dimensions (i.e., diameter J and depth K) corresponding to or slightly greater than the dimensions (i.e., diameter H and height L) of the fixation means heads 41. The upper widened channel part 42 is also provided with an abutment face 43. In that way upper widened channel part 42 can receive such a fixation means head 41 within the outer contours of the outer part 3. These details are illustrated on a bigger scale in figure 9.

In the embodiments of figures 1 to 4 the outer wall 11 of the outer part 3 is forming an abutment face for the fixation means heads 41.

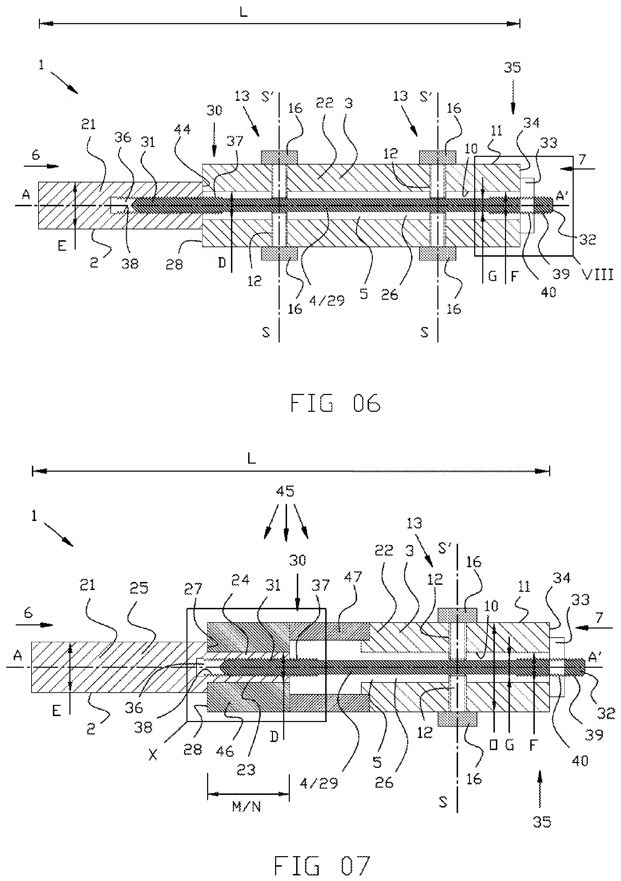

Figure 6 illustrates still another embodiment of a rotational element 1 in accordance with the invention.

The body 2 of the rotational element 1 is again composed of a first rotational element part 21 and a second rotational element part 22, which are interconnected by means of a rigid, direct coupling 23.

However, this rigid, direct coupling 23 is this time not partly realized by means of a press-fit coupling 23 between the concerned rotational element parts 21 and 22. Instead, the rigid, direct coupling 23 is entirely formed by the central stud 29, tie-rod 29 or connection stud 29, which is screwed with its external thread 37 into an inner threaded hole 36 provided in the first rotational element part 21. The first rotational element part 21 is in the illustrated embodiment not executed with a stepped profile, but is executed as a substantially non-hollow, cylindrical shaft part 21.

The second rotational element part 22 is executed as the in the former embodiment of figure 5 as a hollow, cylindrical shaft part 22 with an axially extending channel 26. The central stud 29, tie-rod 29 or connection stud 29 extends through the internal channel 26 of the second rotational element part 22 and is provided at its end 32 with a nut 33 which is screwed over the external thread 39 provided on that end 32 of the connection stud 29 for tightening the nut 33 against an end face 34 of the outer part 3.

In that way, an axial tensioning force is applied between the first rotational element part 21 and the second rotational element part 22. For increasing the rotational friction or inter connection between the rotational element parts 21, friction shims or a Hirth serration can be provided.

The second rotational element part 22 abuts against the end face 44 of the first rotational element part 21.

Two groups 19 and 20 of holes or channels 12 with corresponding bolts 16 are provided in the outer part 3 as was also the case in the embodiment of figure 3.

In figure 7 still another embodiment of a rotational element 1 in accordance with the invention is represented, which embodiment has again a lot of similarities with the embodiment represented in figure 5.

The body 2 of the rotational element 1 comprises multiple parts, said multiple parts including a first part which is a first rotational element part 21 which is similar to the first rotational element part 21 in the embodiment of figure 5, with a stepped profile formed by a first shaft section 24 and a second shaft section 25.

Furthermore, there is also a second rotational element part 22, which is similar to the second rotational element part 21 in the embodiment of figure 5, which is a hollow shaft part 22 having an inner, axially extending channel 26. This second rotational element part 22 has however been executed with a length which is somewhat shorter than the length in the embodiment of figure 5.

Between the first and second rotational element parts 21 and 22 a coupling 45 is provided which is formed by a first coupling part 46 and a second coupling part 47, which are each executed as a ring shaped, cylindrical element.

The first ring-shaped coupling part 46 is rigidly connected to the first shaft section 24 of the first rotational element part 21 in the same way as the outer part 4 was connected to it in the embodiment of figure 5 by means of a press-fit coupling 23. The inner diameter F of the first ring-shaped coupling part 46 corresponds to or is slightly smaller than the outer diameter D of the first shaft section 24 of the first rotational element part 21. The first ring-shaped coupling part 46 has a length M which is the same as the length N of the first shaft section 24 of the first rotational element part 21.

The second coupling part 47 is positioned between the second rotational element part 22 executed as a hollow shaft part 22 and the first coupling part 46. The second coupling part 47 is not necessarily fixedly coupled to any of the surrounding parts 22 and 46 or is coupled fixedly to both surrounding parts 22 and 46 or solely to a single one of the surrounding parts 22 and 46. Such a fixed coupling can consist of a press-fit coupling or coupling by gluing, or any other type of coupling mentioned before and still other types of coupling.

In the example of figure 7 the combination of the coupling 45, i.e., the coupling parts 46 and 47, and the second rotational element part 22 form a substantially cylindrical shaft part having an outer cylindrical wall 11 with outer diameter O. This means that the concerned coupling parts 46 and 47 and the second rotational element part 22 have all the same outer diameter O.

Furthermore, the totality of elements consisting of the first rotational element part 21 and the second rotational element part 22 and the intermediate coupling 45 is held together by means of an axial clamping pre-load, exerted by the central tie-rod or connection stud 29 which is tightened by the nut 33.

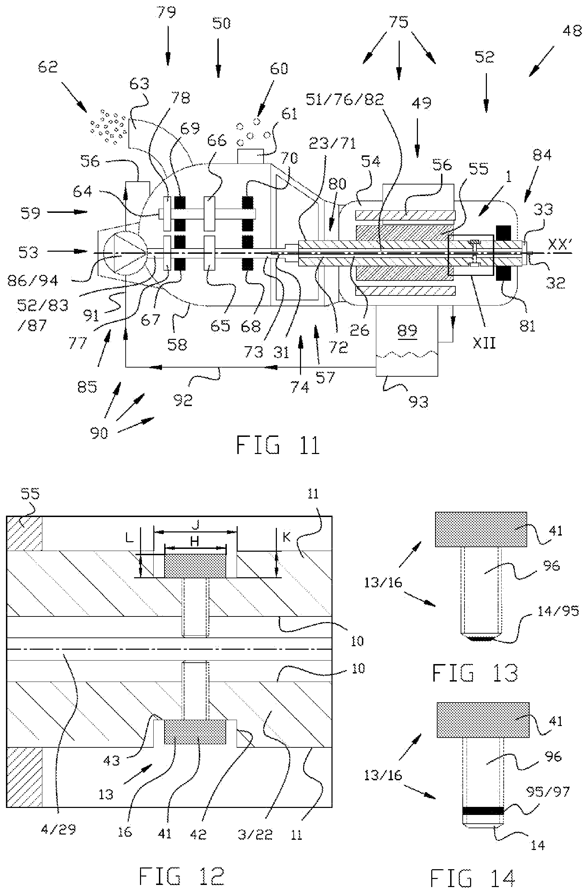

Figure 11 illustrates a compressor assembly 48 in accordance with the invention which comprises a rotational element 1 in accordance with the invention as described before.

According to the invention, this compressor assembly 48 comprises a motor 49 which is connected to a compressor element 50. A motor shaft 51 of the motor 49 drives at least one compressor rotor shaft 52 of a compressor rotor 53 of the compressor element 50.

According to the invention, the motor shaft 51, the rotor shaft 52 or the combination of the motor shaft 51 and the rotor shaft 52 is forming the rotational element 1 or a part thereof. In the case of figure 11, the rotational element 1 is formed by the interconnection of the motor shaft 51 and the concerned rotor shaft 52.

In this case the motor 49 is an electric motor, which is mounted in a motor housing 54. The motor shaft 51 is extending in an axial direction XX' through the motor housing 54. The motor shaft 51 is provided with a motor rotor 55 which is rotating with the motor shaft 51 in motor stator windings 56 which are fixedly mounted in the motor housing 54.

At a drive side 57 of the motor 49, the compressor element 50 is coupled to the motor 49.

The invention is of particular interest for compressor assemblies 48 wherein this compressor element 50 is an oil-free or oil-less compressor element 50.

Preferably, the compressor element 50 of the compressor assembly 48 is a double-rotor compressor element 50 and more in particular the compressor element 50 of the compressor assembly 48 is preferably a tooth compressor element 50 or a screw compressor element 50.

The compressor element 50 is mounted in a compressor element housing 58 and comprises compressor rotors 53 and 59 which can work with one another for compressing fluid 60 supplied to the compressor element 50 at a compressor inlet 61. Compressed or pressurized fluid 62 is discharged at a compressor outlet 63 for being supplied to a consumer or a network of consumers of pressurized or compressed fluid 62.

The fluid 60 is in this case air taken from the surroundings of the compressor element 50, but this is not necessarily the case.

The compressor rotors 53 and 59 comprise each a compressor rotor shaft, respectively compressor rotor shaft 52 and compressor rotor shaft 64, on which in a central part a compressor rotor part is provided, respectively compressor rotor part 65 and compressor rotor part 66.

The compressor rotor part 65 can be a female rotor part 65 which is collaborating with a male rotor part 66 which is forming the other compressor rotor part 66, or vice versa. In practice, the compressor rotor parts 65 and 66 can each for example be a screw rotor of a screw compressor element, or a tooth rotor of a tooth compressor element, but other types are not excluded from the invention.

The compressor element shafts 52 and 64 are each supported in a rotatable manner in the compressor element housing 58 by a pair of compressor rotor shaft bearings, respectively a pair of compressor rotor shaft bearings 67 and 68 and a pair of compressor rotor shaft bearings 69 and 70.

In order to drive the compressor element 50, or more precisely the compressor rotors 53 and 59 of the compressor element 50, by means of the electric motor 49, the motor shaft 51 is, preferably, coupled in a direct manner to the compressor rotor shaft 52 of the compressor rotor 53 by means of a direct coupling 71 of the concerned shafts 51 and 52. The direct coupling 71 is provided between a free end 72 of the motor shaft 51 and a free end 73 of the compressor rotor shaft 52 and is located in an intermediate housing compartment 74 provided between the motor housing 54 and the compressor element housing 58.

The motor housing 54, the compressor element housing 58 and the intermediate housing compartment 74 form together the compressor assembly housing 75.

The combination of the interconnected motor shaft 51 and compressor rotor shaft 52 and the direct coupling 71 can be considered as forming a composed driving shaft 76.

The result is that the compressor rotor 53 of the compressor element 50 is directly driven by the motor shaft 51. The other compressor rotor 59 is driven indirectly by means of the interaction between a couple of timing gears 77 and 78, mounted at a non-drive end 79 of respectively the compressor rotor shaft 52 and the compressor rotor shaft 64.

In the example of figure 11 the rigid, direct coupling 71 between the motor shaft 51 and the compressor rotor shaft 52 is a rigid, pressed coupling or is a rigid heat-shrink coupling 71.

In a first step for realizing such a rigid, direct coupling 71 the end 80 of the motor shaft 51 is heated in order to increase its radial size. Then this heated end 80 with increased radial size is brought over the end 73 of the compressor rotor shaft 52. After cooling the end 80 of the motor shaft 51 is shrank and a firm rigid interconnection is obtained between the motor shaft 51 and the compressor rotor shaft 52.

Furthermore, the motor shaft 51 is supported rotatably in the motor housing 54 by only a single motor shaft bearing 81. Actually, the combination of the motor shaft 51 and the compressor rotor shaft 52 rigidly interconnected by the rigid, direct coupling 71 is to be considered as being a rigid composed driving shaft 76, which is rotatably supported by the pair of bearings 67 and 68 (of the compressor rotor 53) in the compressor element housing 58 and by the single motor shaft bearing 81 in the motor housing 54.

Of course, other configurations of bearing arrangements could be applied for supporting the rigid, composed driving shaft 76. This composed driving shaft 76 can be considered as a rotational element 1 in accordance with the invention.

In the illustrated example of figure 11, for forming the rigid, direct coupling 71 between the motor shaft 51 and the compressor rotor shaft 52, one of the motor shaft 51 and the compressor rotor shaft 52 is executed as a hollow shaft 82 comprising centrally an axially extending channel 26 which extends through the hollow shaft 82. This hollow shaft 82 forms substantially the outer part 3 of the rotational element 1, or at least part of it, and is in this case the motor shaft 51.

In a similar way as in the embodiment of a rotational element 1 as represented in figure 6, the central part 4 of the rotational element 1, is formed by a connection stud 29, which is provided in the axially extending channel 26 of the hollow shaft 82. The connection stud 29 extends with a first end 31 into the other of the motor shaft 51 and compressor rotor shaft 52 which is not executed as a hollow shaft 82, but which is executed as a non-hollow shaft 83. This non-hollow shaft 83 is in the here discussed example the compressor rotor shaft 52.

The connection stud 29 is with its first end 31 fixedly connected to said non-hollow shaft 83. In the illustrated example of figure 11 this fixed connection is in particular realized at the free end 73 of the compressor rotor shaft 52.

The interconnection between the first end 31 of the connection stud 29 and the free end 73 of the compressor rotor shaft 52 is similar to what is illustrated in more detail in figure 10. For that reason, the non-hollow shaft 83 is provided with an internally threaded hole 36 for receiving the first end 31 of the connection stud 29, which first end 31 of the connection stud 29 is provided with external thread 37 which can cooperate with the internal thread 38 in the non-hollow shaft 83.

At the opposite second end 32 of the connection stud 29 tensioning means 84 are provided for tensioning the connection stud 29 with respect to the hollow shaft 82. The second end 32 of the connection stud 29 is provided with external thread 39 which can cooperate with a nut 33 having an internal thread 40, for tightening the connection stud 29 by applying a force against the hollow shaft 82, which is in this case the motor shaft 51.

Finally, over a free end 85 at the non-driven side 52 of the compressor rotor shaft 52, i.e., at a side opposite to the drive side 57 where the motor 49 is coupled to the compressor element 53, the compressor assembly 48 is furthermore provided with an oil pump 86. This oil-pump 86 is this time integrated in the compressor element housing 58, but in other embodiments it could be mounted on the compressor element housing 58.

Important for a compressor assembly 48 in accordance with the invention is the characteristic that this oil-pump 86 is mounted directly on the composed driving shaft 76 or on another compressor rotor shaft 63 of the compressor element 50. In that way a very profound integration of the oil-pump 86 in the compressor assembly 48 is obtained and a very compact design of the compressor assembly 48 can be realized.

The oil pump 86 is mounted over the free end 85 of the compressor rotor shaft 52, which is a non-hollow shaft part 87 of the composed driving shaft 76. This free end 85 extends out of the compressor element housing 58. In that way it is ensured that the oil-pump 86 is mounted over a monolithic, fully materialized, non-hollow or solid shaft 83 or monolithic, non-hollow, solid part 87 of such a shaft 83. This shaft 83 or shaft part 87 can therefore possibly be executed with smaller outer dimensions, which are smaller than the outer dimensions of the hollow shaft part 82 of the composed driving shaft 76.

The solidity of the compressor rotor shaft 52, which is executed as a non-hollow shaft 83, also results in an improved stiffness.

Since the oil-pump 86 is not mounted over a free end of the composed driving shaft 76 at the non-drive side 88 of the motor 49, the internal diameter and/or outer diameter of the hollow shaft 82 (which is the motor shaft 51) at that non-drive side 88 of the motor 49 can be increased. The reason is that there are on that side 88 of the composed driving shaft 76 no restrictions imposed by the requirements of restricted dimensions of the oil-pump 86 for avoiding cavitation. As a consequence, the connection stud 29 can be executed with a larger radial size and higher pre-load can be applied between the motor shaft 51 and the compressor rotor shaft 52. This results also in larger safety margins.

The oil-pump 86 is of course intended for providing a driving force for circulating oil 89 in an oil circulation system 90 of the compressor assembly 48. This oil circulation system 90 is intended for providing oil 89 to components of the compressor assembly 48 for lubrication purposes or for cooling purposes or both.

Oil 89 is sucked at the oil-pump inlet 91 through a suction line 92 from an oil-reservoir 93 or oil-sump 93 which is preferably also integrated in the compressor assembly housing 75, for example by being directly mounted underneath the motor housing 54. The oil 89 is further pumped through an oil-pump pressure line 94 to the concerned components of the compressor assembly 48 and returned to the oil-reservoir or oil-sump 93. In the oil circulation system 90 there is usually also an oil-cooler and oil-filter, which are not represented in the figures.

Components of the compressor assembly 48 that typically need lubrication are for example bearings such as motor shaft bearings 81 or compressor rotor shaft bearings 67 to 70, or are gears, such as timing gears 77 and 78. A component that needs cooling is for example the electric motor 49, compressed fluid 62 at an outlet 63 of the compressor element 50, the compressor element 50 itself or other elements of the compressor assembly 48.

It is clear that such an embodiment of a compressor assembly 48 in accordance with the invention is very interesting in that a very elaborated integration of components in the compressor assembly is realized.

According to the invention, an oil-pump 86 of the compressor assembly 48 is preferably a gerotor pump 94. A gerotor pump 94 is a positive displacement pump which comprises an inner rotor and an outer rotor. The inner rotor has n teeth, while the outer rotor has n+1 teeth. The rotors rotate around their central axis, which axes are not coincident, but which are spaced somewhat from one another. During the rotation, the volumes between the teeth of the inner rotor and the teeth of the outer rotor are permanently decreasing and increasing, which results in the pumping action.

A great advantage of such a gerotor pump 94 is that it can be made in relatively small dimensions, is a very robust and reliable pump with excellent cavitation characteristics.

Figures 13 and 14 illustrate fixation means 13 in the form of a bolt 16 which are executed in a somewhat particular way. As explained before, such a fixation means 13 can be made entirely of a material with high Young's modulus such as steel, or can be made entirely or partially of a material with good elastic or dampening properties, such as a visco-elastic material.

The fixation means 13 illustrated in figures 13 and 14 are partially made of a material with good elastic or dampening properties, such as a visco-elastic material 95.

In particular, in the case of figure 13, the tip 14 of the fixation means 13 or bolt 16 is made of a dampening material 95, while the remaining part of the fixation means 13 or bolt is made of a less resilient material 96.

In the case of figure 14 an intermediate part 97 of the fixation means 13 or bolt 16, which is located between the tip 14 and the fixation means head 41, is made of a dampening material 95, while the remaining part of the fixation means 13 or bolt is made of a less resilient material 96.

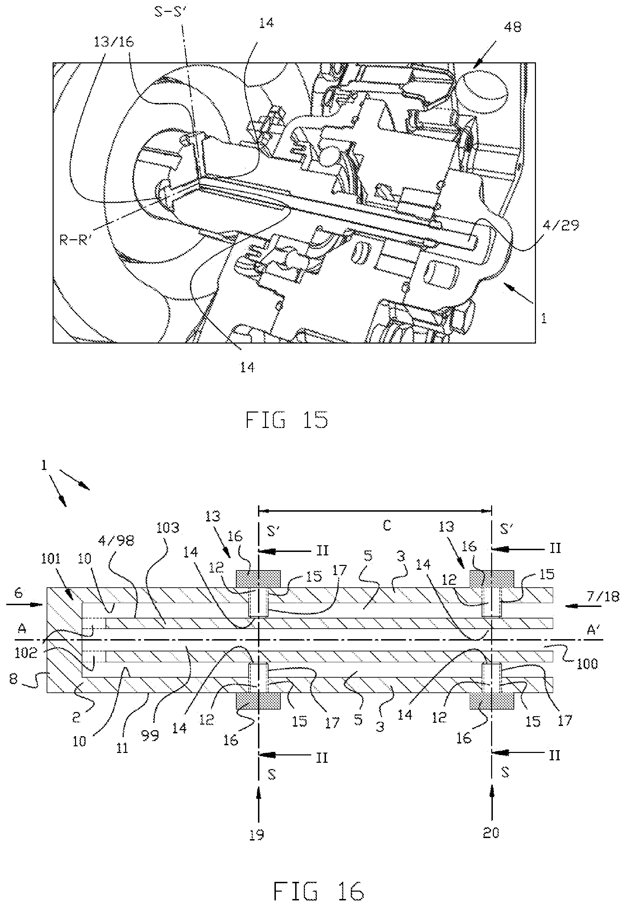

Figure 15 illustrates a perspective view on a part of a more realistic version of a compressor assembly 48 in accordance with the present invention.

The fixation means 13 in the form of bolts 16 extend along radial directions R-R' and S-S' and abut with their tips 14 against a connection stud 29, which is forming the central part 4 of a rotational element 1 of the compressor assembly 48.

Finally, figure 16 represents still another embodiment of a rotational element 1 in accordance with the present invention, which is in a way similar to the embodiment of a rotational element 1 as represented in figure 3 in that it is a rotational element 1 having an open-ended extremity 18, wherein the annular cavity 5 is separating the central part 4 from the outer part 3 at the extremity 7 of the rotational element 1 without being covered and/or wherein there is no side wall 9 which interconnects the central part 4 with the outer part 3.

A difference with the embodiment of figure 3 is that in the embodiment of figure 16 the central part 4 of the rotational element 1 is executed as a hollow central part 98.

The hollow central part 98 comprises an internal channel 99 which forms an open end 100 at one extremity 7 or 18 of the rotational element 1. Furthermore, the internal channel 99 is connected at its other extremity 101 to the annular cavity 5 of the rotational element 1.

This is for example realized by means of openings or radial channels 102 which extend through the cylindrical wall 103 of the central part 4 from the internal channel 99 to the annular cavity 5 surrounding the central part 4.

The annular cavity 5 also forms an open end 100 at the side or extremity 7 opposite to the side or extremity 101 of the internal channel 99 where annular cavity 5 is connected to the internal channel 99 in the central part 4.

This is a very interesting embodiment of a rotational element 1 in accordance with the invention, since the internal channel 99 can for example be used for receiving a cooling liquid at the open end 100, which is pumped through the internal channel 99 and via the openings 102 is evacuated through the annular cavity 5 and through the open end 18 to other parts of a cooling system, or vice versa.

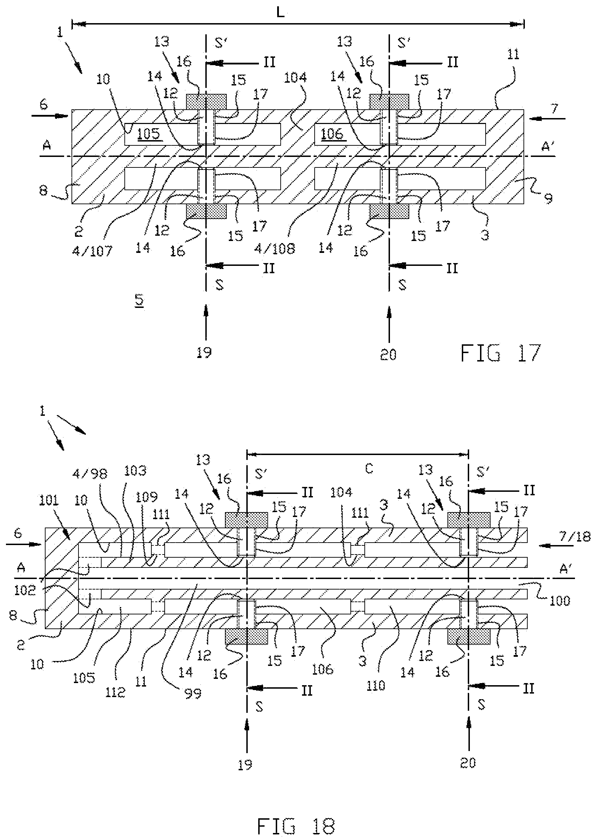

Figure 17 illustrates an embodiment of a rotational element 1 in accordance with the invention which is a somewhat modified version of the embodiment of a rotational element 1 as represented in figure 1.

A difference with the embodiment represented in figure 1 is that in the embodiment of figure 17 the rotational element 1 is provided with an intermediate wall 104 which is located in between the side walls 8 and 9.

In the represented case the intermediate wall 104 is axially positioned, more or less at half the length L of the rotational element 1. However, in other embodiments of a rotational element 1 in accordance with the invention the intermediate wall 104 could be at any other axial position.

The intermediate wall 104 is interconnecting the central part 4 with the outer part 3 of the rotational element 1.

As a result, the rotational element 1 represented in figure 17 is not provided with only one single annular cavity 5, but it comprises two annular cavities 105 and 106 which separate the central part 4 from the outer part 3. The annular cavities 105 and 106 are axially separated from one another by means of the intermediate wall 104.

In this case, the outer part 3 is provided with two groups 19 and 20 of holes or channels 12, as was the case in the embodiment of figure 3 for example, which extend from the outer wall 11 of the outer part 3 to one of the annular cavities 105 or 106. In particular, the holes or channels 12 of the first group 19 extend from the outer wall 11 of the outer part 3 to annular cavity 105 and the holes or channels 12 of the second group 20 extend from the outer wall 11 of the outer part 3 to annular cavity 106.

In the holes or channels 12 fixation means 13 are fixedly mounted which each extend through the corresponding hole or channel 12 and which have a tip 14 which is abutting against the central part 4, respectively to a part 107 or 108 of the central part 4 surrounded by the corresponding annular cavity 105 or 106.

According to the invention, it is possible to provide more than one such an intermediate wall 104 and increase even more the number of annular cavities 5 between the central part 4 and the outer part 3, for example to three annular cavities 5 or more. Each annular cavity 5 can be provided with a group of concerned holes or channels 12 and corresponding fixation means 13. In still other alternative executions, some annular cavities might be provided with fixation means 13 extending through the concerned cavity 5 and in some other of the annular cavities there might not be any such fixation means 13.

Figure 18 illustrates still another embodiment of a rotational element 1 in accordance with the invention which is a modified version of the embodiment illustrated in figure 16, comprising a hollow central part 98 having an internal channel 99 which is connected to the annular cavity 5.

In the embodiment represented in figure 18, there are two intermediate walls 104 and 109, which are provided at intermediate axial positions between the axial extremities 6 and 7 of the rotational element 1 and which interconnected the hollow central part 98 with the outer part 3 of the rotational element 1.

As a result, there are three annular cavities 105, 106 and 110. Annular cavity 110 is an open-ended annular cavity 110 and is axially extending to the open-ended extremity 18.

In order to allow a flow of fluid through the rotational element 1 as was also the case in the rotational element 1 illustrated in figure 16, the intermediate walls 104 and 109 are perforated walls 104 and 109, which are provided with openings 111 which interconnect the different annular cavities 105, 106 and 110.

In this case, two groups 19 and 20 of channels or holes 12are provided in the outer part 3, which extend through the outer part 3 respectively to the annular cavities 106 and 110. In the part 112 of the outer part 3 surrounding the annular cavity 105, which is adjacent to the axial extremity 6 of the rotational element 1, no such group of holes or channels 12 are provided in the represented case. Of course, according to the invention, all kinds of other configurations can be applied, with more or less groups of holes or channels 12, or with other types of groups of holes or channels 12 having more or less holes or channels and/or with other orientations and so on.

The present invention is in no way limited to the embodiments of a rotational element 1 and a compressor assembly 48 as described before, but such a rotational element 1 and a compressor assembly 48 can be applied and be implemented in many different ways without departure from the scope of the invention as defined in the appended claims.

## Claims

1. Rotational element (1), such as a shaft or other rotational part of a device such as a motor or compressor, which is intended for being driven for a rotational movement by means of a driving device or for forming a part of such a driving device, which rotational element (1) is internally provided with at least one annular cavity (5, 105, 106, 110) which separates a central part (4) from an outer part (3) of the rotational element (1), **characterized in that** the outer part (3) is provided with one or more holes or channels (12) which extend from an outer wall (11) of the outer part (3) to the annular cavity (5, 105, 106, 110) and wherein in the holes or channels (12) fixation means (13) are fixedly mounted which each extend through the corresponding hole or channel (12) and which have a tip (14) which is abutting against the central part (4), wherein; the rotational element is provided with tensioning means (33, 84) for tensioning the central part (4) with respect to the outer part (3) of the rotational element (1) or vice versa, and wherein a tensile stress and a compressive stress is induced in the central part (3) and the outer part (4) respectively, or vice versa.

2. Rotational element (1) according to claim 1, **characterized in that** the holes or channels (12) are internally threaded holes or channels (12) and that the fixation means (13) are bolts (16) which are screwed into their respective threaded hole or channel (12) until the tip (14) of the concerned bolt (16) is abutting against the central part (4).

3. Rotational element (1) according to claim 1 or 2, **characterized in that** the tip (14) of the fixation means (13), or another part of the fixation means (13) is made of a dampening material, such as a visco-elastic material, or that the fixation means are entirely made of a dampening material, such as a visco-elastic material.

4. Rotational element (1) according to one or more of the preceding claims, **characterized in that** the fixation means (13) are provided with a fixation means head (41) with an increased diameter (H) compared to the internal diameter (I) of the holes or channels (12) and that the holes or channels (12) are provided with an upper widened channel part (42) at the outer wall (11) of the outer part (3) of the rotational element (1) with dimensions (i.e., diameter J, depth K) corresponding to, or slightly greater than, the dimensions of the fixation means heads (41) and with an abutment face (43) for receiving such a fixation means head (41) within the outer contours of the outer part (3).

5. Rotational element (1) according to one or more of the preceding claims, **characterized in that** the central part (4) of the rotational element (1) has a substantially cylindrical outer shape.

6. Rotational element (1) according to one or more of the preceding claims, **characterized in that** the outer part of the rotational element has an inner wall which (3) has a substantially cylindrical shape.

7. Rotational element (1) according to one or more of the preceding claims, **characterized in that** the holes or channels (12) in the outer part (3) of the rotational element (1) extend in a radial direction (R-R', S-S') perpendicular to the axial direction (A-A') of the central axis of the central part (4).

8. Rotational element (1) according to one or more of the preceding claims, **characterized in that** the rotational element (1) and its holes or channels (12) in the outer part (3) and the fixation means (13) have rotational symmetry around the central axis (A-A') of the central part (4).

9. Rotational element (1) according to one or more of the preceding claims, **characterized in that** at least a first group (19) of holes or channels (12) and a second group (20) of holes or channels (12) are provided in the outer part (3) of the rotational element (1) which first group (19) and second group (20) are with a certain axial distance (C) spaced from one another.

10. Rotational element (1) according to one or more of the preceding claims, **characterized in that** the rotational element (1) is forming a motor shaft (51) or a compressor rotor shaft (52) or is a motor rotor (55) or a compressor rotor (53) comprising respectively a motor shaft (51) or a compressor rotor shaft (52) or a combination thereof.

11. Rotational element (1) according to one or more of the preceding claims, **characterized in that** the rotational element (1) is a composed rotational element (1) which is composed of a first rotational element part (21) and a second rotational element part (22) which are interconnected by means of a rigid, direct coupling (23, 71).

12. Rotational element (1) according to claim 11, **characterized in that** the rigid, direct coupling (23, 71) between the first rotational element part (21) and the second rotational element part (22) is one of the following:
- a pressed coupling;
- a heat-shrinked coupling;
- a spline coupling;
- an interference fit coupling;
- a press fit coupling; or,
- a friction fit coupling.

13. Rotational element (1) according to claim 11 or 12, **characterized in that** the first rotational element part (21) and the second rotational element part (22) each comprise at least a shaft part (21, 22, 24, 25, 46, 47), respectively a first shaft part (21, 24, 25) and a second shaft part (22, 44, 47, 82), wherein one of these shaft parts (22, 44, 47, 82) is executed as a hollow shaft part (22, 82) comprising centrally an axially extending channel (26) which extends through the hollow shaft part (22, 82), wherein in the axially extending channel (26) of the hollow shaft part (22, 82) a connection stud (29) is provided which extends with a first end (31) into the other shaft part (21, 22, 24), and which connection stud (29) is fixedly connected to said other shaft part (21, 22, 24) at that first end (31) and wherein at the opposite second end (32) of the connection stud (29) tensioning means (84) are provided for tensioning the connection stud (29) with respect to the hollow shaft part (22, 82) and wherein the connection stud (29) is forming the central part (4) of the rotational element (1).

14. Rotational element (1) according to claim 13, **characterized in that** the shaft part (21, 24, 25) which is not the hollow shaft part, is provided with an internally threaded hole (36) for receiving the first end (31) of the connection stud (29), which first end (31) of the connection stud (29) is provided with external thread (37) which can cooperate with the internal thread (38) in the shaft part (21, 24, 25) which is not the hollow shaft part (21, 24, 25).

15. Rotational element (1) according to claim 13 or 14, **characterized in that** the second end (32) of the connection stud (29) is provided with external thread (39) which can cooperate with a nut (33) having an internal thread (40), for tightening the connection stud (29) by applying a force against the hollow shaft part (22, 82).

16. Rotational element (1) according to one or more of the preceding claims, **characterized in that** the central part (4) of the rotational element (1) is executed as a hollow central part (98).

17. Rotational element (1) according to claim 16, **characterized in that** the hollow central part (98) comprises an internal channel (99), which forms an open end (100) at one extremity (7, 18) of the rotational element (1), and which is connected at its other extremity (101) to the annular cavity (5, 110) of the rotational element (1) and **in that** the annular cavity (5, 110) forms an open end (18) at the side opposite (7) to the side (101) where the annular cavity (5) is connected to the internal channel (99) in the central part (4).

18. Compressor assembly (48) comprising a rotational element (1) in accordance with one or more of the preceding claims, **characterized in that** the compressor assembly (48) comprises a motor (49) which is connected to a compressor element (50), wherein a motor shaft (51) of the motor drives at least one compressor rotor shaft (52) of a compressor rotor (53) of the compressor element (50) and wherein the motor shaft (51), the rotor shaft (52) or the combination of the motor shaft (51) and the compressor rotor shaft (52) is forming the rotational element (1) or a part thereof.

19. Compressor assembly (48) according to claim 18, **characterized in that** the compressor assembly (48) comprises an oil-pump (86) for pumping oil (89) through an oil circulation system (90) of the compressor assembly (48) and which is also driven by the motor shaft (51), wherein the compressor rotor shaft (52) is connected to the motor shaft (51) by means of a direct coupling (71) so to form a composed driving shaft (76) and wherein the oil-pump (86) is mounted directly on the composed driving shaft (76) or on another compressor rotor shaft (64) of a compressor element (50) of the compressor assembly (48).

## Patentansprüche

1. Rotationselement (1), wie eine Welle oder ein anderes Rotationsteil einer Vorrichtung wie ein Motor oder Verdichter, das dazu bestimmt ist, für eine Rotationsbewegung mittels einer Antriebsvorrichtung angetrieben zu werden oder ein Teil einer solchen Antriebsvorrichtung auszubilden, wobei das Rotationselement (1) im Inneren mit mindestens einem ringförmigen Hohlraum (5, 105, 106, 110) versehen ist, der ein zentrales Teil (4) von einem Außenteil (3) des Rotationselements (1) trennt, **dadurch gekennzeichnet, dass** das äußere Teil (3) mit einem oder mehreren Löchern oder Kanälen (12) versehen ist, die sich von einer Außenwand (11) des äußeren Teils (3) zu dem ringförmigen Hohlraum (5, 105, 106, 110) erstrecken, und wobei in den Löchern oder Kanälen (12) Fixierungsmittel (13) fest angebracht sind, die sich jeweils durch das entsprechende Loch oder den entsprechenden Kanal (12) erstrecken und die eine Spitze (14) aufweisen, die an dem zentralen Teil (4) anliegt, wobei; das Rotationselement mit Spannmitteln (33, 84) versehen ist zum Spannen des zentralen Teils (4) in Bezug auf das Außenteil (3) des Rotationselements (1) oder umgekehrt, und wobei eine Zugspannung und eine Druckspannung in dem zentralen Teil (3) bzw. dem Außenteil (4) induziert wird, oder umgekehrt.

2. Rotationselement (1) nach Anspruch 1, **dadurch gekennzeichnet, dass** die Löcher oder Kanäle (12) Gewindebohrungen oder Kanäle (12) mit Innengewinde sind und dass die Fixierungsmittel (13) Schrauben (16) sind, die in ihre jeweilige Gewindebohrung oder ihren jeweiligen Kanal (12) eingeschraubt werden, bis die Spitze (14) der betreffenden Schraube (16) an dem zentralen Teil (4) anliegt.

3. Rotationselement (1) nach Anspruch 1 oder 2,
**dadurch gekennzeichnet, dass** die Spitze (14) des Fixierungsmittels (13) oder ein anderes Teil des Fixierungsmittels (13) aus einem dämpfenden Material, wie einem viskoelastischen Material, hergestellt ist, oder dass die Fixierungsmittel vollständig aus einem dämpfenden Material, wie einem viskoelastischen Material, hergestellt sind.

4. Rotationselement (1) nach einem oder mehreren der vorstehenden Ansprüche, **dadurch gekennzeichnet, dass** die Fixierungsmittel (13) mit einem Fixierungsmittelkopf (41) mit einem im Vergleich zum Innendurchmesser (I) der Löcher oder Kanäle (12) vergrößerten Durchmesser (H) versehen sind und dass die Löcher oder Kanäle (12) an der Außenwand (11) des Außenteils (3) des Rotationselements (1) mit einem oberen erweiterten Kanalteil (42) mit Abmessungen (d. h. Durchmesser J, Tiefe K), die den Abmessungen der Fixierungsmittelköpfe (41) entsprechen oder geringfügig größer als diese sind, und mit einer Anlagefläche (43) zur Aufnahme eines solchen Fixierungsmittelkopfes (41) innerhalb der Außenkonturen des Außenteils (3) versehen sind.

5. Rotationselement (1) nach einem oder mehreren der vorstehenden Ansprüche, **dadurch gekennzeichnet, dass** das zentrale Teil (4) des Rotationselements (1) eine im Wesentlichen zylindrische Außenform aufweist.

6. Rotationselement (1) nach einem oder mehreren der vorstehenden Ansprüche, **dadurch gekennzeichnet, dass** das Außenteil des Rotationselements eine Innenwand aufweist, die (3) eine im Wesentlichen zylindrische Form aufweist.

7. Rotationselement (1) nach einem oder mehreren der vorstehenden Ansprüche, **dadurch gekennzeichnet, dass** sich die Löcher oder Kanäle (12) in dem Außenteil (3) des Rotationselements (1) in einer radialen Richtung (R-R', S-S') senkrecht zur axialen Richtung (A-A') der Mittelachse des zentralen Teils (4) erstrecken.

8. Rotationselement (1) nach einem oder mehreren der vorstehenden Ansprüche, **dadurch gekennzeichnet, dass** das Rotationselement (1) und seine Löcher oder Kanäle (12) im Außenteil (3) und die Fixierungsmittel (13) eine Rotationssymmetrie um die Mittelachse (A-A') des zentralen Teils (4) aufweisen.

9. Rotationselement (1) nach einem oder mehreren der vorstehenden Ansprüche, **dadurch gekennzeichnet, dass** mindestens eine erste Gruppe (19) von Löchern oder Kanälen (12) und eine zweite Gruppe (20) von Löchern oder Kanälen (12) im Außenteil (3) des Rotationselements (1) bereitgestellt sind, wobei die erste Gruppe (19) und die zweite Gruppe (20) mit einem bestimmten axialen Abstand (C) voneinander beabstandet sind.

10. Rotationselement (1) nach einem oder mehreren der vorstehenden Ansprüche, **dadurch gekennzeichnet, dass** das Rotationselement (1) eine Motorwelle (51) oder eine Verdichterrotorwelle (52) ausbildet oder ein Motorrotor (55) oder ein Verdichterrotor (53) ist, umfassend jeweils eine Motorwelle (51) oder eine Verdichterrotorwelle (52) oder eine Kombination davon.

11. Rotationselement (1) nach einem oder mehreren der vorstehenden Ansprüche, **dadurch gekennzeichnet, dass** das Rotationselement (1) ein zusammengesetztes Rotationselement (1) ist, das aus einem ersten Rotationselementteil (21) und einem zweiten Rotationselementteil (22) zusammengesetzt ist, die mittels einer starren, direkten Kupplung (23, 71) miteinander verbunden sind.

12. Rotationselement (1) nach Anspruch 11, **dadurch gekennzeichnet, dass** die starre, direkte Kupplung (23, 71) zwischen dem ersten Rotationselementteil (21) und dem zweiten Rotationselementteil (22) eine der folgenden ist:
- eine Presskupplung;
- eine aufgeschrumpfte Kupplung;
- eine Keilwellenkupplung;
- eine Übermaßkupplung;
- eine Presspassungskupplung; oder
- eine Reibschlusskupplung.

13. Rotationselement (1) nach Anspruch 11 oder 12,
**dadurch gekennzeichnet, dass** das erste Rotationselementteil (21) und das zweite Rotationselementteil (22) jeweils mindestens ein Wellenteil (21, 22, 24, 25, 46, 47), beziehungsweise ein erstes Wellenteil (21, 24, 25) und ein zweites Wellenteil (22, 44, 47, 82) umfassen, wobei eines dieser Wellenteile (22, 44, 47, 82) als ein hohles Wellenteil (22, 82) ausgeführt ist, das mittig einen sich axial erstreckenden Kanal (26) umfasst, der sich durch das hohle Wellenteil (22, 82) erstreckt, wobei in dem sich axial erstreckenden Kanal (26) des hohlen Wellenteils (22, 82) ein Verbindungszapfen (29) bereitgestellt ist, der sich mit einem ersten Ende (31) in das andere Wellenteil (21, 22, 24) erstreckt, und wobei der Verbindungszapfen (29) an diesem ersten Ende (31) fest mit dem anderen Wellenteil (21, 22, 24) verbunden ist, und wobei an dem gegenüberliegenden zweiten Ende (32) des Verbindungszapfens (29) Spannmittel (84) bereitgestellt sind zum Spannen des Verbindungsbolzens (29) in Bezug auf das hohle Wellenteil (22, 82) und wobei der Verbindungsbolzen (29) das zentrale Teil (4) des Rotationselements (1) bildet.

14. Rotationselement (1) nach Anspruch 13, **dadurch gekennzeichnet, dass** das Wellenteil (21, 24, 25), das nicht das hohle Wellenteil ist, mit einer Innengewindebohrung (36) zur Aufnahme des ersten Endes (31) des Verbindungsbolzens (29) versehen ist, wobei dieses erste Ende (31) des Verbindungsbolzens (29) mit einem Außengewinde (37) versehen ist, das mit dem Innengewinde (38) in dem Wellenteil (21, 24, 25), das nicht das hohle Wellenteil (21, 24, 25) ist, zusammenwirken kann.

15. Rotationselement (1) nach Anspruch 13 oder 14,
**dadurch gekennzeichnet, dass** das zweite Ende (32) des Verbindungsbolzens (29) mit einem Außengewinde (39) versehen ist, das mit einer Mutter (33) mit einem Innengewinde (40) zusammenwirken kann, zum Festziehen des Verbindungsbolzens (29) durch Ausüben einer Kraft gegen das hohle Wellenteil (22, 82).

16. Rotationselement (1) nach einem oder mehreren der vorstehenden Ansprüche, **dadurch gekennzeichnet, dass** das zentrale Teil (4) des Rotationselements (1) als hohles zentrales Teil (98) ausgeführt ist.

17. Rotationselement (1) nach Anspruch 16, **dadurch gekennzeichnet, dass** das hohle zentrale Teil (98) einen inneren Kanal (99) umfasst, der ein offenes Ende (100) an einem Ende (7, 18) des Rotationselements (1) ausbildet und der an seinem anderen Ende (101) mit dem ringförmigen Hohlraum (5, 110) des Rotationselements (1) verbunden ist, und dass der ringförmige Hohlraum (5, 110) ein offenes Ende (18) an der Seite (7) gegenüber der Seite (101) ausbildet, an der der ringförmige Hohlraum (5) mit dem inneren Kanal (99) im zentralen Teil (4) verbunden ist.

18. Verdichteranordnung (48), umfassend ein Rotationselement (1) nach einem oder mehreren der vorstehenden Ansprüche,
**dadurch gekennzeichnet, dass** die Verdichteranordnung (48) einen Motor (49) umfasst, der mit einem Verdichterelement (50) verbunden ist, wobei eine Motorwelle (51) des Motors mindestens eine Verdichterrotorwelle (52) eines Verdichterrotors (53) des Verdichterelements (50) antreibt und wobei die Motorwelle (51), die Rotorwelle (52) oder die Kombination der Motorwelle (51) und der Verdichterrotorwelle (52) das Rotationselement (1) oder ein Teil davon ausbildet.

19. Verdichteranordnung (48) nach Anspruch 18,
**dadurch gekennzeichnet, dass** die Verdichteranordnung (48) eine Ölpumpe (86) zum Pumpen von Öl (89) durch ein Ölzirkulationssystem (90) der Verdichteranordnung (48) umfasst, und welche ebenfalls von der Motorwelle (51) angetrieben wird, wobei die Verdichterrotorwelle (52) mittels einer direkten Kupplung (71) mit der Motorwelle (51) verbunden ist, um so eine zusammengesetzte Antriebswelle (76) zu bilden, und wobei die Ölpumpe (86) direkt an der zusammengesetzten Antriebswelle (76) oder an einer anderen Verdichterrotorwelle (64) eines Verdichterelements (50) der Verdichteranordnung (48) montiert ist.

## Revendications

1. Élément rotatif (1) tel qu'un arbre ou une autre partie rotative d'un dispositif tel qu'un moteur ou un compresseur, qui est destiné à être entraîné pour mettre en œuvre un mouvement rotatif au moyen d'un dispositif d'entraînement ou à faire partie d'un tel dispositif d'entraînement ; dans lequel ledit élément rotatif (1) est équipé, dans sa partie interne, d'au moins une cavité annulaire (5, 105, 106, 110) qui sépare une partie centrale (4) d'une partie externe (3) de l'élément rotatif (1), **caractérisé en ce que** la partie externe (3) est munie d'un ou de plusieurs trous ou canaux (12) qui s'étendent à partir d'une paroi externe (11) de la partie externe (3) jusqu'à la cavité annulaire (5, 105, 106, 110) ; et dans lequel, dans les trous ou canaux (12), sont montés à demeure des moyens de fixation (13) qui s'étendent chacun à travers le trou ou le canal correspondant (12), et qui possèdent une extrémité (14) qui vient buter contre la partie centrale (4) ; dans lequel l'élément rotatif est équipé de moyens de mise sous tension (33, 84) qui sont destinés à mettre la partie centrale (4) sous tension par rapport à la partie externe (3) de l'élément rotatif (1) ou vice versa ; et dans lequel une contrainte de tension et une contrainte de compression sont induites dans la partie centrale (3) et dans la partie externe (4), respectivement, ou vice versa.

2. Élément rotatif (1) selon la revendication 1, **caractérisé en ce que** les trous ou canaux (12) représentent des trous ou des canaux taraudés (12) ; et **en ce que** les moyens de fixation (13) représentent des boulons (16) qui sont vissés dans leur trou ou leur canal taraudé respectif (12) jusqu'à ce que l'extrémité (14) du boulon (16) en question vienne buter contre la partie centrale.

3. Élément rotatif (1) selon la revendication 1 ou 2, **caractérisé en ce que** l'extrémité (14) des moyens de fixation (13) ou une autre partie des moyens de fixation (13) est constituée d'un matériau d'amortissement, comme par exemple un matériau viscoélastique, ou **en ce que** les moyens de fixation sont entièrement constitués d'un matériau d'amortissement, comme par exemple un matériau viscoélastique.

4. Élément rotatif (1) selon une ou plusieurs des revendications précédentes, **caractérisé en ce que** les moyens de fixation (13) sont munis d'une tête de moyen de fixation (41) qui présente un diamètre (H) qui est supérieur au diamètre interne (I) des trous ou canaux (12) ; et **en ce que** les trous ou canaux (12) sont munis d'une partie supérieure de canal élargie (42) sur la paroi externe (11) de la partie externe (3) de l'élément rotatif (1) avec des dimensions (c'est-à-dire un diamètre J, une profondeur K) qui correspondent aux dimensions des têtes (41) des moyens de fixation ou qui sont légèrement supérieures à celles-ci, ainsi que d'une face de butée (43) destinée à la réception d'une telle tête de moyen de fixation (41) à l'intérieur des contours externes de la partie externe (3).

5. Élément rotatif (1) selon une ou plusieurs des revendications précédentes, **caractérisé en ce que** la partie centrale (4) de l'élément rotatif (1) possède une configuration externe de forme sensiblement cylindrique.

6. Élément rotatif (1) selon une ou plusieurs des revendications précédentes, **caractérisé en ce que** la partie externe de l'élément rotatif possède une paroi interne (3) qui possède une configuration externe de forme sensiblement cylindrique.

7. Élément rotatif (1) selon une ou plusieurs des revendications précédentes, **caractérisé en ce que** les trous ou canaux (12) dans la partie externe (3) de l'élément rotatif (1) s'étendent dans une direction radiale (R-R', S-S') qui est perpendiculaire à la direction axiale (A-A') de l'axe central de la partie centrale (4).

8. Élément rotatif (1) selon une ou plusieurs des revendications précédentes, **caractérisé en ce que** l'élément rotatif (1), ainsi que ses trous ou canaux (12) dans la partie externe (3), de même que les moyens de fixation (13) possèdent une symétrie de rotation autour de l'axe central (A-A') de la partie centrale (4).

9. Élément rotatif (1) selon une ou plusieurs des revendications précédentes, **caractérisé en ce qu'**au moins un premier groupe (19) de trous ou de canaux (12) et un deuxième groupe (20) de trous ou de canaux (12) sont prévus dans la partie externe (3) de l'élément rotatif (1) ; dans lequel ledit premier groupe (19) et ledit deuxième groupe (20) sont espacés l'un de l'autre sur une certaine distance axiale (C).

10. Élément rotatif (1) selon une ou plusieurs des revendications précédentes, **caractérisé en ce que** l'élément rotatif (1) forme un arbre de moteur (51) ou un arbre de rotor de compresseur (52) ou représente un rotor de moteur (55) ou un rotor de compresseur (53) qui comprennent respectivement un arbre de moteur (51) ou un arbre de rotor de compresseur (52) ou une combinaison de ces derniers.

11. Élément rotatif (1) selon une ou plusieurs des revendications précédentes, **caractérisé en ce que** l'élément rotatif (1) représente un élément rotatif composite (1) qui se compose d'une première partie d'élément rotatif (21) et d'une deuxième partie d'élément rotatif (22) qui sont interconnectées par l'intermédiaire d'un accouplement rigide et direct (23, 71).

12. Élément rotatif (1) selon la revendication 11, **caractérisé en ce que** l'accouplement rigide et direct (23, 71) entre la première partie d'élément rotatif (21) et la deuxième partie d'élément rotatif (22) représente un des éléments repris ci-après :
- un accouplement fretté ;
- un accouplement par frettage thermique ;
- un accouplement cannelé ;
- un accouplement par ajustement serré ;
- un accouplement emmanché à force ; ou
- un accouplement par frottement.

13. Élément rotatif (1) selon la revendication 11 ou 12, **caractérisé en ce que** la première partie d'élément rotatif (21) et la deuxième partie d'élément rotatif (22) comprennent chacune au moins une partie d'arbre (21, 22, 24, 25, 46, 47), respectivement une première partie d'arbre (21, 24, 25) et une deuxième partie d'arbre (22, 44, 47, 82) ; dans lequel une de ces parties d'arbre (22, 44, 47, 82) est réalisée sous la forme d'une partie d'arbre creux (22, 82) qui comprend, en position centrale, un canal qui s'étend dans la direction axiale (26) qui s'étend à travers la partie d'arbre creux (22, 82) ; dans lequel, dans le canal (26), de la partie d'arbre creux (22, 82), qui s'étend dans la direction axiale (26), on prévoit un goujon de raccordement (29) qui s'étend avec une première extrémité (31) jusque dans l'autre partie d'arbre (21, 22, 24) ; et dans lequel ledit goujon de raccordement (29) est relié à demeure à ladite autre partie d'arbre (21, 22, 24) à cette première extrémité (31) ; et dans lequel, à la deuxième extrémité opposée (32) du goujon de raccordement (29), on prévoit des moyens de mise sous tension (84) qui sont destinés à la mise sous tension du goujon de raccordement (29) par rapport à la partie d'arbre creux (22, 82) ; et dans lequel le goujon de raccordement (29) forme la partie centrale (4) de l'élément rotatif (1).

14. Élément rotatif (1) selon la revendication 13, **caractérisé en ce que** la partie d'arbre (21, 24, 25) qui ne représente pas la partie d'arbre creux, est équipée d'un trou taraudé (36) qui est destiné à recevoir la première extrémité (31) du goujon de raccordement (29) ; dans lequel ladite première extrémité (31) du goujon de raccordement (29) est munie d'un filet de vis externe (37) qui peut coopérer avec le filet de vis interne (38) dans la partie d'arbre (21, 24, 25) qui ne représente pas la partie d'arbre creux (21, 24, 25).

15. Élément rotatif (1) selon la revendication 13 ou 14, **caractérisé en ce que** la deuxième extrémité (32) du goujon de raccordement (29) est munie d'un filet de vis externe (39) qui peut coopérer avec un écrou (33) qui possède un filet de vis interne (40) pour le serrage du goujon de raccordement (29) en exerçant une force sur la partie d'arbre creux (22, 82).

16. Élément rotatif (1) selon une ou plusieurs des revendications précédentes, **caractérisé en ce que** la partie centrale (4) de l'élément rotatif (1) est réalisée sous la forme d'une partie centrale creuse (98).

17. Élément rotatif (1) selon la revendication 16, **caractérisé en ce que** la partie centrale creuse (98) comprend un canal interne (99) qui forme une extrémité ouverte (100) à une extrémité (7, 18) de l'élément rotatif (1) et qui est relié, à son autre extrémité (101), à la cavité annulaire (5, 110) de l'élément rotatif (1) ; et **en ce que** la cavité annulaire (5, 110) forme une extrémité ouverte (18) sur le côté (7) opposé au côté (101) à l'endroit où la cavité annulaire (5) est reliée au canal interne (99) dans la partie centrale (4).

18. Ensemble compresseur (48) qui comprend un élément rotatif (1) en conformité avec une ou plusieurs des revendications précédentes, **caractérisé en ce que** l'ensemble compresseur (48) comprend un moteur (49) qui est relié à un élément (50) faisant office de compresseur ; dans lequel un arbre de moteur (51) du moteur entraîne au moins un arbre de rotor de compresseur (52) d'un rotor de compresseur (53) de l'élément (50) faisant office de compresseur ; et dans lequel l'arbre de moteur (51), l'arbre de rotor (52) ou la combinaison de l'arbre de moteur (51) et de l'arbre de rotor de compresseur (52) forment l'élément rotatif (1) ou une partie de ce dernier.

19. Ensemble compresseur (48) selon la revendication 18, **caractérisé en ce que** l'ensemble compresseur (48) comprend une pompe à huile (86) qui est destinée à pomper de l'huile (89) à travers un système de circulation d'huile (90) de l'ensemble compresseur (48) et qui est également entraînée par l'arbre de moteur (51) ; dans lequel l'arbre de rotor de compresseur (52) est relié à l'arbre de moteur (51) au moyen d'un accouplement direct (71) d'une manière telle que l'on obtient un arbre d'entraînement composite (76) ; et dans lequel la pompe à huile (86) est montée directement sur l'arbre d'entraînement composite (76) ou sur un autre arbre de rotor de compresseur (64) d'un élément (50) faisant office de compresseur de l'ensemble compresseur (48).
